# EUROPEAN PATENT APPLICATION

(11) **EP 2 813 996 A1**
(43) Date of publication of application: **17.12.2014**
(21) Application number: 14002039.7
(22) Date of filing: 13.06.2014
(51) Int. Cl.: G06Q 30/06

(54) **Method for post-assembling a used vehicle in the pre-acquisition procedure in an electronic system by means of a user device**

(30) Priority: 16.06.2013 EE 201300064
(71) Applicant: Silver Havamaa, 10149 Tallinn (EE)
(72) Inventor: Silver Havamaa, 10149 Tallinn (EE)
(74) Representative: Koitel, Raivo

(57) **Abstract**

The present invention provides a method in an electronic system for post-assembling of the used vehicle in the pre-acquisition procedure by the means of the user device. The electronic system is supplied with the administration interface for inserting data, which will allow to insert, among other information, the information about accessories available for each used car. The choice of available accessories may differ from the accessories approved or manufactured by the manufacturer of the used vehicle, Information about the accessories and options available for selection is presented to the user by the means of the user device. Electronic system is accommodated with the web-based or database-based user interface. The user inserts the preferred technical criteria of the used vehicle by the means of the user device, then used as search parameters, and the search from one or more databases is carried out according to the inserted parameters by the electronic system. Also the partial search responses are selectively presented to the user by the user device. After selection of the used vehicle, which was fully or partially complied to the search criteria, the user device will present the user with the available accessories, and the user can then select the preferable accessories. Accessories available for a vehicle's selectable may be part of the vehicles' search criteria. The selection of the accessories may be bound to presentation of the cost information to the user and after selection of the preferred accessories also presentation of the total cost of the used vehicle. The method for acquisition of the used vehicle and the selected accessories is selectively enabled by the means of the web-based user interface.

## Description

### Technical field

The invention represents a method for post-assembling of a used vehicle in the pre-acquisition procedure within an electronic system with various accessories, employing, for example, a web interface.

### Prior art

A solution from Estonian utility model EE 00974 U1 (published on Oct. 15, 2010) is known from prior art, disclosing a method for choosing a vehicle to match the different wishes and opportunities of a buyer, for example, financial resources available, purchase power, income etc. The method involves matching vehicles available to the descriptive parameters, entered by potential buyer of the vehicle. Inability to adjust the supply level of acquired vehicle, even if this would make the vehicle a better match with the description, entered by the prospective buyer, is the main disadvantage of the method concerned.

Systems adjusted by vehicle manufacturers for the sale of new vehicles, allowing to place an order to the works for vehicles, equipped with predefined accessories, is known from prior art; sales of vehicles with various accessories, pre-assembled at works, is also quite common. For example, when acquiring a new vehicle, a prospective buyer can choose and commission a specific make and model of a vehicle, using the type marking available to supply level (for example, the name of the make may include reference to accessories, letter "S" may stand for essential accessories while "SE" would mean a larger number of accessories and "HSE" for a vehicle with the maximum number of accessories). The last abbreviation is used by Land Rover to characterise the accessories, available with Range Rover Discovery.

A solution from patent application WO 2008/022384 A1 (published on Feb. 28, 2008) is known from prior art, involving searches that are conducted against parameters, predefined by user, and the weight attached to these parameters. The method does not involve attempts to attach additional functions to the search object; instead, it attempts to present the user with matches as close to the search criteria used as possible.

### Summary of the invention

The purpose of this invention is to allow buyers of used cars to pre-assemble the vehicle of choice, apart the accessories fitted by the manufacturing works, with miscellaneous accessories by employing the user device. Therefore, should a person looking for a used vehicle find a vehicle that matches the main search criteria (brand, model, year of manufacture, colour, odometer reading etc.), but it lacks some of the important accessories, these can be commissioned from either the seller or mediator without leaving the sales ad, whereas fitting of material accessories (remote control engine heating, like *Webasto,* seat heating (involving removal of seat covers, fitting of heating elements and connecting these to match the manufacturer's instructions and re-fitting of seat covers), reverse camera, cruise control etc.) can be requested in addition to the regular accessories (for example, tinted glasses, exchange of cast aluminium wheels, replacement of a cassette player for CD player, fitting with anti-burglary system etc.) while placing the order. Therefore, it will be possible to commission both accessories, manufactured or approved by the manufacturer concerned, but also by third parties, provided that the match has been checked, in advance, for the vehicle concerned. The method will be applicable by means of a web-based user interface.

Implementation of the invention concerned would allow the buyer first to source a vehicle, matching the original wishes as closely as possible, allowing the potential buyer to feel secure and avoid excessive hassle and waste of time, as the potential buyer may not have specialty knowledge about the vehicles and may not know or realise that the accessories of choice can be fitted to the vehicle of interest. And even if the buyer will learn of this option once the vehicle has been acquired, this will mean extra time and/or money to have the chosen accessories fitted, as the buyer must not start to look for the required accessories and their suppliers and, where appropriate, also someone to get them fitted.

Accessories, available during the post-assembling process, will include both equipment and materials and works and services, for example, fitting of tinted glasses etc., but also choosing the insurance company that offers Motor Own Damage Insurance or Casco insurance etc. insurance packages.

The web-based user interface will have one or more data fields that the potential buyer can use to insert information and data fields that will present the choices, previously pre-defined with the user device in the electronic system.

According to the method, the buyer will get a delivery of a vehicle fitted with all the accessories previously chosen.

### Preferred embodiments of the invention

One of the preferred embodiments of the invention includes creation of a web-based user interface that will be used for post-assembling of a used vehicle in the pre-acquisition procedure. For the implementation of the method, the web environment shall include an integrated administration interface for inserting data, used to insert, among other things, for accessories requested for every specific vehicle, e.g. choice of vanity plate, registration of vehicle, updates on survey, pre-acquisition checks in the foreign country concerned and at domestic level, adding a safety package, washing of the vehicle, choice of alarm systems available, choice of immobilisation systems available, choice of seat heating, choice of preheating system, choice of reversing camera, choice of surveillance system for the vehicle, choice of tinted glasses, choice of cruise control, choice of hands-free system, choice of parking sensors, choice of additional warranty term, choice of the method for delivery and transfer of the vehicle etc.

According to the method, the web-based user interface will be used to enter information about the chosen accessories available and the choices will be also presented to the user by means of user device.

According to the method, the potential buyer of a used vehicle will use technical parameters of a preferred vehicle by means of web-based user interface as search parameters, then using the web-based user interface to carry out a search against the criteria among one or more databases. Once the potential buyer has chosen a vehicle that matches the search criteria, samples of accessories available will be presented to the buyer by means of user device, allowing the potential buyer to make a choice among the preferred technical accessories.

Choosing of technical accessories may be linked to presenting different costs to the buyer by means of user device and once the accessories of choice have been selected, total value of the vehicle will be displayed.

The buyer will choose the accessories and pay for the services by means of a web-based user interface, for example, when paying for the vehicle of choice.

Selectively, it will be possible to specify the details of inquiry, placed by the user by means of the electronic system, outside the system and alternative payment methods will be available.

A further preferred embodiment will involve adjustment of the previous embodiment to allow the activation of the search within the electronic system by means of user device to find partial matches to search criteria, pre-defined by the user, also allowing the user to present the vehicle's compliance with search criteria, once new accessories have been taken into consideration. The user may be presented with a vehicle, by means of the user device, which will only be a perfect match to the search criteria if the user will acquire a used vehicle that has been previously fitted with the requested accessories.

Yet another consecutive preferred embodiment will involve adjustment of the previous embodiments to allow marking, within the system, the selective search criteria (both the available parameters of the vehicle and combined with accessories of interest available, where appropriate) used by the user, which the vehicle will be not required to match. It will be also possible to assign the selective search criteria with weighing coefficients that will be used to highlight the importance of search criteria for the user. Different marking and grouping will be then used, selectively, when responses to inquiries are presented; for example, first the responses that matched all the criteria will be presented, followed by responses that did not match one of the selective criteria; then responses that did not match two of the selective search criteria etc., whereas the weighing coefficients can be applied for additional sorting of the responses when these are displayed to the user.

## Claims

1. Method in an electronic system for post-assembling of a used vehicle in the pre-acquisition procedure within an electronic system by means of a user device, whereas electronic system will be used to enter parameters of general technical properties of the vehicle, allowing to conduct a search for a used vehicle and choose used vehicles, after inserting user information, within an electronic system by means of a user device, **characterised in that** the electronic system will be furnished with information about accessories available for the used vehicles, whereas the technical accessories may differ from the accessories made available by the manufacturer concerned; the electronic system will be supplied with fields to display and present accessories and services by the user, applying the user devices; the electronic system can be used to run a search for a used vehicle from one or more databases of used vehicles for sale, linked to the electronic system, against the search parameters entered by the user, for example, general technical parameters of the used vehicle; used vehicles that match the search criteria in full or in part will be presented to the user by means of the user device and where one used vehicle is chosen, the parameters describing the vehicle will be presented with the technical accessories and services available for selection; the user can then choose one or more technical accessories and services for the used vehicle within the electronic system; total cost of the used vehicle will be then presented to the user in the electronic system, followed by selective acquisition of the vehicle.

2. Method according to claim 1, **characterised in that** the electronic system will present the user with price information among the parameters of accessories available.

3. Method according to claim 1 and 2, **characterised in that** electronic system will allow creating a search that will only match the wishes of the user in part; the electronic system will also allow to present the compliance of the used vehicle to the search criteria, for example, in-part or full match, whereas the parameters of used vehicles that participate in the search will be supplemented by the electronic system with the parameters of accessories available for selection.

4. Method according to claims 1 to 3, **characterised in that** the electronic system will provide the user with alternatives to be selected for paying for the vehicle and the chosen technical accessories and services.

5. Method according to claims 1 to 4, **characterised in that** the electronic system will be supplied with a database-based user interface, available from the website.
